(19) **Europäisches Patentamt / European Patent Office / Office européen des brevets**

(11) **EP 1 261 151 B1**

(12) # FASCICULE DE BREVET EUROPEEN

(45) Date de publication et mention de la délivrance du brevet:
**18.01.2012 Bulletin 2012/03**

(51) Int Cl.:
***H04B 7/26*** *(2006.01)*

(21) Numéro de dépôt: **02291105.1**

(22) Date de dépôt: **02.05.2002**

(54) **Procédé d'attribution de ressources dans un système de télécommunications du type MF-TDMA**

Verfahren für Resourcenzuteilung in einem MF-TDMAtelekommunicationseinrichtung

Resources allocation method in a MF-TDMA telecommunication system

(84) Etats contractants désignés:
**AT BE CH CY DE DK ES FI FR GB GR IE IT LI LU MC NL PT SE TR**

(30) Priorité: **22.05.2001 FR 0106723**

(43) Date de publication de la demande:
**27.11.2002 Bulletin 2002/48**

(73) Titulaire: **Alcatel Lucent**
**75007 Paris (FR)**

(72) Inventeur: **Niddam, David**
**31830 Plaisance du Touch,**
**Toulouse (FR)**

(74) Mandataire: **Ameline, Jean-Paul B.C.**
**Alcatel-Lucent International**
**32 Avenue Kléber**
**92700 Colombes (FR)**

(56) Documents cités:
**EP-A- 1 045 606    WO-A-99/26422**
**US-A- 6 031 827**

EP 1 261 151 B1

**Description**

L'invention est relative à un procédé d'attribution de ressources en communication dans un système de télécommunications du type MF-TDMA, notamment, mais non exclusivement, par satellite géostationnaire en mode transparent.

Pour transmettre simultanément une multiplicité de communications de type numérique, on sait qu'on peut utiliser divers types de ressources en communication, notamment des fréquences, des intervalles de temps et des codes.

La transmission de type MF-TDMA (Multi - frequency-Time Division Multiple Access), qui utilise simultanément une multiplicité de fréquences et des intervalles de temps, permet un débit important de données. C'est pourquoi, elle est utilisée dans la norme DVB-RCS, en cours d'élaboration, qui concerne la transmission de données numériques (audio, vidéo, internet, etc ...) par l'intermédiaire d'un satellite.

Dans un tel système de télécommunication, chaque porteuse, de fréquence déterminée, présente un nombre donné d'intervalles de temps (time slots en langue anglaise) par trame, ce nombre d'intervalles de temps par trame étant égal à l'unité ou à une puissance de deux, par exemple (4, 8 , 16, 32, 64, 128 intervalles de temps par trame).

Les messages sont transmis par supertrames contenant un nombre déterminé de trames. Une trame, qui comprend un nombre déterminé de porteuses et d'intervalles de temps, est transmise pendant un temps déterminé et une supertrame s'étend sur un nombre N de durées de trames et comporte un nombre $N_1$ de porteuses.

Au cours d'une trame, un même message peut être transmis sur plusieurs porteuses de types différents, c'est-à-dire avec des intervalles de temps de durées différentes.

En général, les communications en mode MF-TDMA peuvent s'effectuer "en étoile", c'est-à-dire par l'intermédiaire d'une station de base. En d'autres termes, un terminal communique avec un autre terminal par l'intermédiaire de la station de base. Il est également possible d'effectuer des communications directement entre terminaux, sans passer par la station de base, ce type de communication étant appelé « maillé ». Il est possible aussi de combiner les communications en étoile et les communications maillées.

US-A-6031827 décrit un procédé d'attribution des ressources en communications à des terminaux dans un système de télécommunication du type MF-TDMA.

On a constaté que pour les données en temps réel, la transmission en étoile ou maillée de type MF-TDMA pouvait entraîner des défauts. Ainsi, quand il s'agit de signaux vidéo, les défauts peuvent être visibles et pour les signaux audio, les défauts peuvent être audibles. On a découvert que ces défauts proviennent d'instabilités temporelles (gigues) entraînant des imprécisions sur les temps séparant les divers paquets d'une même communication.

Pour remédier à cet inconvénient, l'invention prévoit, selon un premier de ses aspects, de transmettre les données en temps réel d'une même communication de façon telle que d'une supertrame à une autre, une trame d'un rang donné présente toujours le même motif de ressources pour cette communication en temps réel. Autrement dit, quand un intervalle de temps d'un rang déterminé pour une porteuse donnée est attribué à la communication en temps réel, cette porteuse et cet intervalle de temps restent attribués à la même connexion pour la trame concernée pour toutes les supertrames de cette connexion.

De cette manière, les positions temporelles des données restent toujours les mêmes les unes par rapport aux autres. On a constaté qu'avec cette disposition, les instabilités sont minimisées.

Dans un mode de réalisation, pour minimiser les calculs d'attribution des ressources et donc simplifier et accélérer l'attribution des ressources, pour ces données en temps réel, le motif est le même pour toutes les trames d'une même supertrame.

Quel que soit son mode de réalisation, l'immobilisation des ressources (c'est-à-dire la répétition des motifs de ressources) pour chaque trame pour les données en temps réel simplifie l'attribution des ressources.

Par ailleurs, pour optimiser l'attribution des ressources, il n'est pas indispensable que les données non en temps réel (nRT) soient figées de la même manière que les données en temps réel. En effet, pour ces données, qui sont par exemple le courrier électronique ou le trafic Internet, les problèmes d'instabilité sont beaucoup moins critiques que pour les données en temps réel. Dans ce cas on attribue les ressources à chaque supertrame en fonction des disponibilités laissées par les motifs figés.

Dans un système de télécommunication, les terminaux sont généralement des produits qui doivent être réalisés en grande série et donc à bas coût.

Pour atteindre cet objectif l'invention concerne donc, selon un second de ses aspects qui peut être utilisé indépendamment du premier, un terminal destiné à communiquer en mode MF-TDMA qui est tel qu'il ne peut émettre simultanément sur deux fréquences et que, de même, il ne peut pas recevoir simultanément sur deux fréquences. A cet effet, lorsqu'un intervalle de temps d'une porteuse déterminée a été attribué, les intervalles de temps des autres porteuses qui coïncident en tout en partie avec, ou qui sont contenus dans, cet intervalle de temps, ou qui recouvrent cet intervalle de temps, seront inutilisés pour le même terminal dans le même mode d'émission ou de réception.

Selon un troisième aspect de l'invention, qui peut également s'utiliser indépendamment des autres, les ressources sont, pour chaque trame, attribuées de façon uniforme dans le temps afin d'optimiser le canal de transmission tel qu'un transpondeur dans un satellite de télécommunication.

Selon encore un autre aspect de l'invention, indépendant des précédents, mais qui a également pour but de limiter la complexité des terminaux, ceux-ci sont tels qu'ils comportent des moyens pour limiter le nombre de types de porteuses et le nombre de porteuses qui peuvent être utilisés à chaque instant. Un type de porteuse correspond à une vitesse de modulation et un codage.

Également pour limiter la complexité des terminaux on prévoit de limiter leur agilité en fréquences tant en émission qu'en réception, c'est-à-dire d'imposer une valeur limite aux sauts de fréquences, cette valeur pouvant être différente en émission et en réception.

L'attribution des ressources pour chaque terminal en réception et en émission est effectuée en permanence, supertrame par supertrame, à partir d'un organe de gestion se trouvant généralement dans la station de base.

L'attribution des ressources doit donc être effectuée sur un budget de temps inférieur à la durée de la supertrame, c'est-à-dire en quelques dizaines de millisecondes pour un nombre de terminaux qui peut être important, pouvant être de plusieurs milliers, voire davantage.

L'attribution des ressources constitue donc un problème difficile à résoudre.

Un autre but de l'invention est donc de fournir des moyens d'attribution des ressources dans un tel système de télécommunication qui soit à la fois rapide et peu coûteux. A cet effet, selon encore un autre aspect indépendant de l'invention, pour une recherche rapide de ressources disponibles, celles-ci sont mémorisées sous forme de vecteurs ou mots constitués de chiffres binaires représentant des types de ressources, un bit, par exemple 1, indiquant une ressource utilisable et un bit à l'autre valeur, par exemple 0, indiquant une ressource inutilisable. Ainsi, pour chaque type de porteuse, on peut prévoir un vecteur ayant un nombre de composantes égal à celui des intervalles de temps correspondants pour une trame et pour chaque intervalle de temps, on peut prévoir un vecteur pour les fréquences correspondantes. On peut aussi prévoir pour toutes les porteuses d'un type déterminé, c'est-à-dire contenant le même nombre d'intervalles de temps, un vecteur dans lequel on indique les disponibilités pour chaque intervalle de temps.

Un autre vecteur peut être prévu pour chaque type de porteuse qui fournit une indication sur les intervalles de temps utilisables en émission. On peut aussi prévoir un vecteur fournissant la liste des intervalles de temps disponibles en réception de type maillé pour un terminal donné et un type donné de porteuse afin d'indiquer la disponibilité des ressources en réception de type maillé.

Un compteur par type de trame pour déterminer le nombre de fréquences utilisables dans chaque intervalle de temps peut également être utile pour une attribution rapide des ressources.

Selon un mode de réalisation la recherche d'une ressource disponible dans un vecteur ou mot s'effectue de la façon suivante :

Chaque vecteur ou mot est divisé en une pluralité de mots secondaires et on forme à partir des mots secondaires un mot primaire ayant autant de chiffres que le nombre de mots secondaires et chaque chiffre du mot primaire contient un bit à une valeur donnée, par exemple 1, indiquant une ressource disponible, quand au moins un bit du mot secondaire correspondant présente la même valeur. Ainsi, pour rechercher les valeurs 1, on effectue d'abord une recherche dans le mot primaire et ensuite dans le (ou les) mot(s) secondaire(s) correspondant à des ressources disponibles. Par exemple, si on part d'un mot (ou vecteur) de 1 024 bits et si on utilise un processeur à 32 bits, il suffira de deux cycles du processeur pour trouver le premier bit à 1 dans un mot de 32 bits.

L'invention concerne ainsi un procédé d'attribution des ressources en communications à des terminaux dans un système de télécommunication du type MF-TDMA dans lequel des données numériques sont transmises sur une pluralité de porteuses et sur des intervalles de temps sélectionnés pour chaque porteuse, les ressources étant attribuées pour chaque terminal par trames, groupées en supertrames, ce procédé étant tel que, pour la transmission, pour un terminal, de données en temps réel, dans chaque trame d'un rang donné d'une supertrame, le motif, constitué d'intervalles de temps et de porteuses, de ressources attribuées au terminal reste le même au cours des diverses supertrames de la communication concernée par les données en temps réel.

Dans une réalisation, le motif de ressources attribuées à la communication de données en temps réel est le même pour toutes les trames de chaque superstrame.

Selon une réalisation, on attribue aux communications de données autres qu'en temps réel des ressources disponibles variables d'une supertrame à une autre supertrame.

Lorsqu'un intervalle de temps est attribué à un terminal pour un type -émission ou réception- de transmission, les intervalles de temps simultanés des autres porteuses qui sont égaux à, qui chevauchent, ou sont compris dans, l'intervalle de temps attribué peuvent être rendus indisponibles pour ce terminal et pour le même type de transmission, de façon qu'un terminal ne puisse émettre ou recevoir simultanément dans le même intervalle de temps sur deux porteuses différentes.

L'invention concerne aussi un tel procédé pour l'attribution des ressources en communications à des terminaux dans un système de télécommunication du type MF-TDMA par satellite transparent, dans lequel pour répartir de façon uniforme les ressources en intervalles de temps, dans chaque trame, l'attribution de ces ressources en intervalles de temps s'effectue à chaque nouvelle supertrame en partant du dernier intervalle de temps qui avait été positionné au cours de la supertrame précédente.

Elle se rapporte aussi à un procédé dans lequel, pour faciliter la recherche de ressources disponibles à attribuer, pour chaque type de porteuse, c'est-à-dire pour les porteuses ayant une même durée d'intervalle de temps, on prévoit un ensemble de vecteurs, ou mots, constitués chacun d'une suite de chiffres binaires dont une valeur représente une ressource disponible et l'autre valeur une indisponibilité de ressources, ces vecteurs comprenant :

- un premier vecteur comportant un nombre de composantes égal au nombre d'intervalles de temps de la trame et dont la valeur de chaque composante représente la disponibilité d'une fréquence pour l'intervalle de temps considéré,
- pour chaque intervalle de temps un vecteur de fréquences comprenant un nombre de composantes égal au nombre de fréquences, la valeur de chaque composante représentant la disponibilité de cette fréquence, et
- pour chaque fréquence un vecteur d'intervalles de temps ayant un nombre de composantes égal au nombre d'intervalles de temps, la valeur de chaque composante représentant la disponibilité de cet intervalle de temps à cette fréquence.

Dans cette réalisation, pour l'attribution d'une ressource, on peut rechercher d'abord dans le premier vecteur puis, si au moins une composante indique la disponibilité d'une fréquence, pour l'intervalle de temps correspondant on recherche la fréquence disponible dans le vecteur de fréquences.

Pour l'attribution d'une ressource à un terminal pour lequel une fréquence porteuse, du type considéré, est disponible, on peut effectuer une recherche dans le vecteur d'intervalles de temps qui correspond à cette fréquence disponible afin de déterminer un intervalle de temps disponible.

Selon un mode d'exécution, on prévoit, pour chaque type de porteuse, un vecteur comprenant autant de composantes que d'intervalles de temps, chaque composante représentant la disponibilité en émission de cet intervalle de temps, et un vecteur comprenant également un nombre de composantes égal au nombre d'intervalles de temps et dont la valeur de chaque composante représente la disponibilité en réception de cet intervalle de temps.

Dans une réalisation, pour permettre une recherche rapide, on divise chaque vecteur ou mot en un ensemble de mots secondaires et en ce qu'on forme un mot primaire ayant un nombre de chiffres binaires égal au nombre des mots secondaires, la valeur de chaque chiffre binaire du mot primaire représentant la présence, dans le mot secondaire correspondant, d'au moins un chiffre représentatif d'une disponibilité de ressource, la recherche s'effectuant d'abord dans le mot primaire puis dans un mot secondaire correspondant à une ressource disponible.

Tous les mots secondaires peuvent comporter le même nombre de chiffres binaires et le mot primaire peut comporter un nombre de chiffres binaires égal au nombre de chiffres binaires de chaque mot secondaire.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un système de télécommunication conforme à l'invention,
la figure 2 est un schéma d'une trame utilisant un procédé d'attribution de ressources conforme à l'invention,
la figure 3 montre une supertrame comportant une pluralité de trames,
la figure 4 est un schéma illustrant des communications de type étoile et de type maillé,
la figure 5 est un organigramme montrant certaines étapes d'un procédé conforme à l'invention,
la figure 6 est un schéma d'attribution de fréquences pour les divers types de communications des terminaux,
la figure 7 est un schéma montrant des vecteurs conformes à l'invention utilisés pour une attribution rapide de ressources en communication,
la figure 8 est un organigramme d'un procédé d'attribution de ressources conforme à l'invention,
la figure 9 montre, de façon détaillée, une étape du procédé représenté sur la figure 8,
la figure 9a illustre, à l'aide des vecteurs de la figure 7, les étapes du procédé représenté sur la figure 9,
la figure 10 est un organigramme montrant une autre étape du procédé représenté sur la figure 8,
la figure 10a illustre, à l'aide de vecteurs correspondant à ceux de la figure 7, les étapes du procédé montré sur la figure 10,
la figure 11 est schéma illustrant un procédé de recherche rapide de bit dans un vecteur, ce procédé étant utilisé dans certaines étapes des figures 9 et 10, et
la figure 11a est un schéma illustrant aussi un procédé de recherche rapide dans un vecteur à $32^3$ bits.

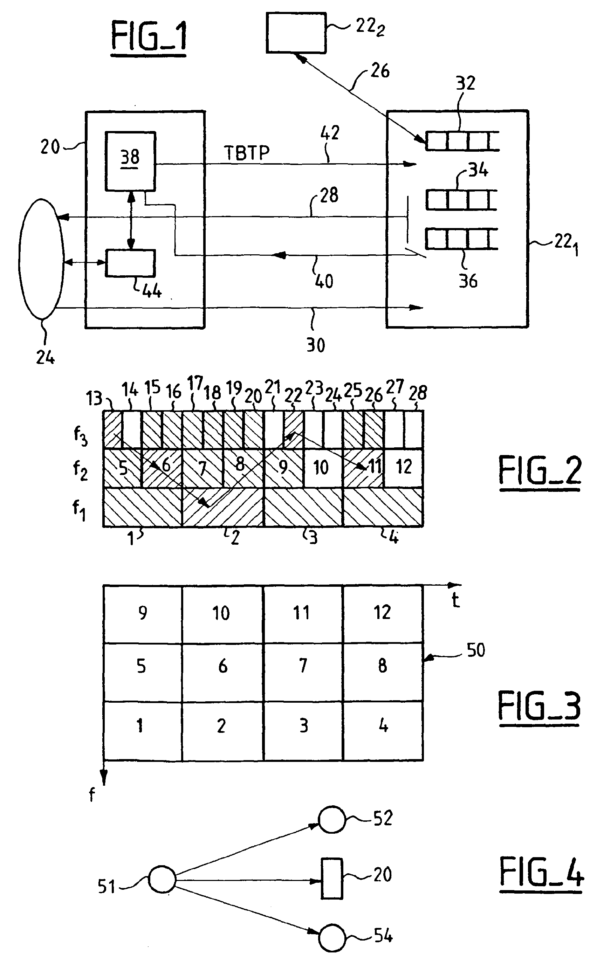

Un exemple de système de télécommunication conforme à l'invention est représenté sur la figure 1. Dans cette réalisation, toutes les communications s'effectuent par l'intermédiaire d'un satellite (non montré), notamment de type géostationnaire transparent (c'est-à-dire constituant un simple relais), et le territoire couvert par ce satellite est divisé en zones et à chaque zone est affectée une station de base 20. Dans chaque zone, on prévoit une pluralité de terminaux dont le nombre peut être très important, par exemple de l'ordre d'une centaine de milliers.

Sur la figure 1, on a représenté de façon schématique un terminal $22_1$ et un terminal $22_2$. Les terminaux peuvent

communiquer entre eux directement, sans passer par la station 20, ou peuvent communiquer par l'intermédiaire de la station 20. En outre, pour la communication avec d'autres zones, les communications passent obligatoirement par la station 20 d'où elles sont transmises à un noeud 24 du réseau.

Une communication directe entre terminaux $22_1$ et $22_2$ est représentée sur la figure 1 par la double flèche 26. Une telle communication est dite maillée. Une communication par l'intermédiaire du noeud 24 relié à la station 20 est représentée par la flèche 28, du terminal 221 vers le noeud 24, et par la flèche 30 du noeud 24 vers le terminal. Une telle communication par l'intermédiaire d'un noeud est appelée une communication en étoile.

Chaque terminal $22_1$, $22_2$ émet et reçoit des données de divers types, notamment des données numériques en temps réel, notées RT, stockées dans des mémoires 32, 34 et des données non en temps réel, notées nRT, stockées dans des mémoires.

Les données en temps réel sont, par exemple, des données audio, telles que des communications téléphoniques et des données vidéo.

Les données nRT sont par exemple le courrier électronique, ou des accès à un réseau de type Internet.

Les ressources en communication de chaque terminal sont attribuées en permanence par un organe de commande 38 se trouvant dans la station 20. Cet organe de commande reçoit de chaque terminal un signal 40 d'estimation de capacité nécessaire pour la communication, ou connexion, demandée. En retour (flèche 42), l'organe de commande 38 attribue les ressources physiques qui seront décrites plus loin.

Dans la station 20, on prévoit aussi un organe 44 d'acceptation ou non d'une communication et de fin de communication. Cet organe 44 reçoit les demandes de communication des terminaux par l'intermédiaire de l'organe de commande 38 et lorsque l'organe 44 permet la communication, il le signale à l'organe de commande 38 pour permettre l'attribution des ressources physiques.

Les communications s'effectuent en mode MF-TDMA. Dans ce type de transmission, les informations numériques sont transmises sur une multiplicité de fréquences porteuses $f_1$, $f_2$, $f_3$, etc. (figure 2) et ces porteuses peuvent être de types divers. On rappelle que le type d'une porteuse MF-TDMA est défini par le nombre d'intervalles de temps dans une trame. Par exemple, pour la porteuse $f_1$, on prévoit quatre intervalles de temps, notés respectivement 1, 2, 3 et 4, la porteuse $f_2$, comporte huit intervalles de temps, notés de 5 à 12 sur la figure 2 et pour la porteuse $f_3$ on prévoit seize intervalles de temps notés respectivement 13 à 28. Le nombre d'intervalles de temps par trame d'une porteuse est $2^N$, N étant un entier. Ainsi on peut prévoir des porteuses $f_4$ à 32 intervalles de temps, des porteuses $f_5$ à 64 intervalles de temps, etc.

Pour toutes les porteuses, les intervalles de temps ont tous le même débit utile et pour un type donné de porteuse les intervalles de temps ont tous la même durée. Dans ces conditions, l'intervalle de temps n°1 de la porteuse $f_1$ est simultané aux intervalles de temps 5 et 6 de la porteuse $f_2$. Cet intervalle de temps n°1 de la porteuse $f_1$ est également simultané aux intervalles de temps 13 à 16 de la porteuse $f_3$.

Une communication, ou connexion, peut être transmise au cours d'une même trame sur plusieurs porteuses.

Un ensemble de trames est transmis ensemble pour former une supertrame. Dans l'exemple montré sur la figure 3, on prévoit qu'une super trame 50 comporte 12 trames numérotées de 1 à 12, les trames 1 à 4 comportant les mêmes porteuses mais étant transmises successivement. Les trames 5 à 8 comportent aussi les mêmes porteuses, différentes de celles des trames 1 à 4, et elles sont transmises en succession, les trames 1 et 5 étant transmises simultanément, tout comme les trames 2 et 6, etc. De même, les trames 9 à 12 comportent toutes les mêmes fréquences porteuses, différentes de celles des trames 1 à 4 et 5 à 8, et sont transmises en succession, la trame 9 étant émise simultanément aux trames 5 et 1.

Les attributions des ressources aux divers terminaux sont effectuées trame par trame ou supertrame par supertrame. L'attribution des ressources peut être modifiée d'une trame à une autre.

Selon un premier aspect de l'invention, les données RT en temps réel d'une même communication d'un même terminal $22_1$ sont transmises avec un même motif de ressources d'une trame à une autre. Par exemple, comme montré sur la figure 2, au cours d'une trame, les données en temps réel du terminal $22_1$ sont transmises dans les intervalles de temps 13, 6, 2, 22 et 11. Ce motif reste le même pour chaque trame d'un rang déterminé dans une supertrame. Par exemple, si la trame représentée sur la figure 2 est la trame n°5 dans la supertrame 50 (figure 3), le motif d'intervalles de temps 13, 6, 2, 22 et 11 sera toujours le même pour cette trame n°5 d'une supertrame à une autre pour le flux de données RT ainsi transmis.

Le caractère figé (immobile) du motif d'attribution des ressources limite les variations temporelles, ou gigue ("jitter"), les unes par rapport aux autres, des données numériques ainsi transmises, ce qui constitue un avantage important pour de telles données.

En outre, le caractère répétitif du motif limite les calculs à effectuer en temps réel, ce qui facilite la réalisation de l'organe de commande 38.

Dans une réalisation, les motifs pour les données en temps réel RT sont les mêmes pour l'ensemble des trames 1 à 12 d'une supertrame 50, ce qui diminue encore les temps de calcul à effectuer pour l'attribution des ressources. Autrement dit, dans cette variante, dans toutes les trames 1 à 12 de la supertrame 50, on attribuera les intervalles de temps 13, 6, 2, 22 et 11, et dans cet ordre.

Pour profiter pleinement des capacités de la transmission MF-TDMA, l'attribution des ressources pour les données nRT, qui sont moins prioritaires que les données RT, est réévaluée à chaque supertrame 50. L'attribution des ressources pour ces données nRT est, à chaque fois, fonction des demandes de capacité (40) provenant des terminaux. Bien entendu, les ressources attribuées aux données nRT sont celles laissées disponibles par le motif de transmission des données RT.

Selon un second aspect de l'invention, qui peut s'appliquer indépendamment du premier, et qui concerne tant les données RT que les données nRT, chaque terminal est tel qu'il ne peut, à un instant donné, émettre que sur un intervalle de temps donné sur une seule fréquence. Si d'autres données doivent être émises on choisira d'autres intervalles de temps. De même, quand un terminal reçoit les données sur un intervalle de temps déterminé, cette réception ne s'effectue que sur une seule fréquence, le terminal ne pouvant recevoir simultanément d'autres données à une autre fréquence. De cette manière, on facilite la réalisation des modems des terminaux.

Cette propriété signifie que lorsque le terminal émet (ou reçoit) sur la porteuse $f_2$ pendant l'intervalle de temps n°6, il ne peut émettre ou recevoir simultanément sur les autres porteuses $f_1$ ou $f_3$.

L'organe 38 doit donc tenir compte de ces contraintes pour l'attribution des ressources. Ainsi cet organe 38 est tel qu'il interdit l'émission (ou la réception), par le même terminal $22_1$, au cours des intervalles de temps des autres porteuses qui se trouvent intégralement ou en partie simultanés à l'intervalle de temps attribué 6. Il en résulte qu'on ne peut, pour la même émission ou réception d'un même terminal, attribuer l'intervalle n°1 (de durée double de l'intervalle n°6) et les intervalles 15 et 16 dont chacun a une durée moitié de celle de l'intervalle n°6. De façon analogue, quand l'intervalle de temps n°2 est attribué, les intervalles de temps n°7, 8 et 17 à 20 ne peuvent être attribués. Quand l'intervalle de temps 22 est attribué, les intervalles 9 et 3 sont inutilisables pour la même fonction d'émission ou de réception.

Cependant, cette interdiction d'attribution simultanée de ressources n'est valable que pour une même nature de transmission, c'est-à-dire pour une émission ou une réception. En d'autres termes, si l'intervalle de temps 6 de la porteuse $f_2$ est utilisé pour l'émission, l'intervalle de temps 1 de la porteuse $f_1$ pourra être utilisé pour la réception par le même terminal.

Outre les contraintes liées à la capacité limitée de chaque terminal, l'attribution des ressources doit respecter les autres contraintes liées à l'optimisation des communications et notamment le bilan de liaison. Ainsi, on pourra affecter un intervalle de temps court pour un bon bilan de liaison et un intervalle de temps long pour un bilan de liaison moins favorable. Par exemple, quand un terminal 51 doit émettre, d'une part, vers deux terminaux 52 et 54 et, d'autre part, vers la station centrale 20 (figure 4), pour la liaison du terminal 51 vers le terminal 52, on choisira par exemple l'intervalle de temps n°6 et pour la liaison du terminal 51 vers le terminal 54, on choisira l'intervalle de temps n°2, alors que pour la liaison du terminal 51 vers la station 20, on choisira l'intervalle de temps n°22. On observe que pour les liaisons maillées, c'est-à-dire de terminal à terminal, pour lesquelles le bilan de liaison n'est pas le plus favorable, on choisit des intervalles de temps 6 et 2 relativement longs, alors que pour la liaison vers la station 20, on choisit un intervalle de temps relativement court car la station 20 dispose d'une antenne de réception performante.

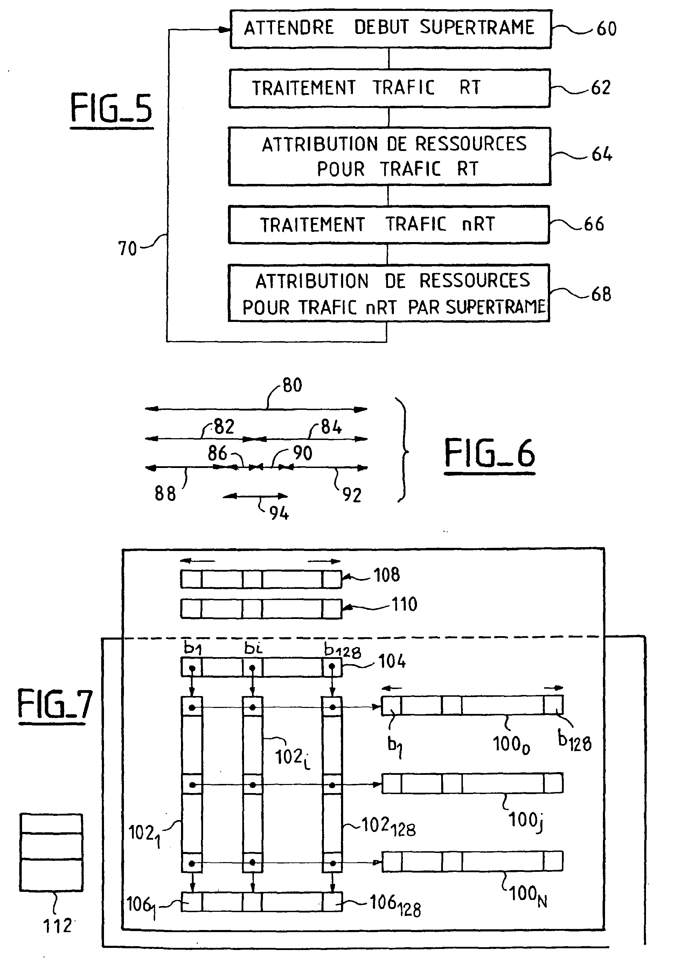

La figure 5 est un diagramme illustrant le procédé d'attribution des ressources du type décrit ci-dessus, notamment en relation avec la figure 2.

Pour attribuer les ressources, on attend le début d'une super trame (étape 60).

Ensuite (étape 62), l'organe de commande 38 traite les demandes de connexion en temps réel RT, c'est-à-dire les demandes de connexions ou les demandes de libération. Ces demandes sont traitées par le dispositif 44 (figure 1) d'admission d'appels.

Le résultat de l'étape 62 est, comme on l'a vu plus haut, qu'on attribue des ressources "figées" pour le trafic RT. Ces attributions de ressources sont transmises par la voie 42 vers les terminaux par un signal dit "TBTP" (étape 64).

Les données nRT sont traitées (étape 66) après l'attribution des ressources aux données RT.

La dernière étape (68) consiste donc à attribuer les ressources physiques pour le trafic nRT en tenant compte des contraintes indiquées ci-dessus, les ressources attribuées aux données nRT n'étant valables que pour une supertrame comme le montre la liaison 70 entre l'étape 68 et l'étape de départ 60 d'attente de supertrame.

Selon encore un autre aspect de l'invention, également pour limiter la complexité de réalisation des terminaux, ceux-ci sont tels qu'ils n'acceptent, pour l'émission et la réception, qu'un nombre limité de porteuses et un nombre limité de types de porteuse. Bien entendu, le nombre de types de porteuses est au plus égal au nombre de porteuses. Autrement dit, si on prévoit 4 porteuses, on prévoira 1, 2, 3 ou 4 types de porteuses. Si le nombre de types de porteuses est égal à l'unité, les 4 porteuses considérées seront toutes de même type, c'est-à-dire toutes avec la même durée d'intervalle de temps.

Cette limitation du nombre de paramètres attribuables à chaque terminal est une contrainte gérée par l'organe de commande 38. Toutefois, dans une réalisation, pour limiter les contraintes imposées à l'organe central de commande 38, certaines fonctions de gestion peuvent être effectuées dans le terminal lui-même. Par exemple, si le terminal utilise son nombre maximal de porteuses autorisé et s'il doit utiliser une porteuse différente, devant donc remplacer une des porteuses déjà utilisée, le choix de la porteuse à écarter est effectué dans le terminal lui-même. Par exemple, la porteuse qui est écartée pour laisser la place à une nouvelle porteuse attribuée par l'organe 38 est la porteuse la plus anciennement attribuée. Un protocole d'échange entre l'organe de commande 38 et le terminal permet que l'organe de commande 38 écarte, lui aussi, la porteuse la plus anciennement attribuée au terminal pour attribuer une nouvelle porteuse à ce terminal.

Selon encore un autre aspect de l'invention, qui peut être également utilisé indépendamment des autres aspects, on choisit une distribution des fréquences telle qu'elle permette que les terminaux aient une agilité en fréquences limitée en réception et en émission tout en permettant toutes les connexions possibles entre terminaux, en maillé ou en étoile.

Par agilité limitée, on entend qu'un terminal ne peut sauter d'une fréquence à une autre que d'une valeur limitée qui peut être différente en réception et en émission. Ainsi, dans un exemple, la capacité à effectuer des sauts de fréquences est de 20 MHz en réception MF-TDMA et de 50 MHz en émission MF-TDMA.

Dans l'exemple représenté sur la figure 6, la bande de fréquences attribuée aux terminaux est représentée par la ligne 80 et la largeur de cette bande est de 100 MHz.

On divise cette bande 80 de fréquences de 100 MHz en deux parties égales dans cet exemple, chaque partie correspondant à un groupe de terminaux.

Pour l'émission, un premier groupe de terminaux utilise la demi-bande 82 et le second groupe de terminaux utilise la demi-bande supérieure 84, chacune de ces demi-bandes ayant une largeur de 50 MHz.

Dans chacune des deux demi-bandes d'émission, 82 et 84, on prévoit deux parties inégales. Ainsi, la demi-bande 82 comporte une sous-bande 86 de largeur 10 MHz qui correspond aux valeurs les plus élevées de la demi-bande 82, ainsi qu'une sous-bande 88 de largeur 40 MHz. De même, la demi-bande 84 comporte deux sous-bandes inégales, à savoir une sous-bande 90, également de largeur 10 MHz, correspondant aux plus faibles valeurs de la demi-bande 84, et une sous-bande 92 de largeur 40 MHz.

Les sous-bandes adjacentes et jointives 86 et 90, qui, ensemble, forment une bande de largeur 20 MHz sont utilisées pour l'émission de type maillé de terminal à terminal, tandis que les sous-bandes 88 et 92 sont utilisées pour les émissions de type étoile, des terminaux vers la station centrale.

Enfin, pour la réception de type maillé, on attribue l'ensemble des deux sous-bandes centrales jointives 86 et 90.

On voit qu'ainsi les contraintes d'agilité en fréquences en émission sont respectées puisque, dans chaque groupe de terminaux, la bande de fréquences d'émission s'étend sur 50 MHz et la bande de réception maillée s'étend sur 20 MHz.

Par exemple, un terminal du premier groupe pourra émettre tant en maillé qu'en étoile tout en respectant la contrainte d'agilité limitée à 50 MHz puisque dans ce premier groupe, la demi-bande 82 a une largeur de 50 MHz. De même, pour le second groupe, la demi-bande 84 a une largeur limitée à 50 MHz.

Pour les communications maillées, un terminal du premier groupe pourra émettre vers un terminal quelconque, du premier ou du second groupe, puisque sa bande d'émission maillée, limitée à 10MHz (qui sera la réception pour le terminal récepteur), se trouve comprise dans la sous-bande de réception 94 maillée. Autrement dit, une émission choisie dans la bande 86 est une fréquence qui se trouve dans la bande de réception 94 de tous les terminaux pour les communications maillées.

Bien qu'il soit préférable que les largeurs des sous-bandes centrales 86 et 90 soient égales, on peut cependant prévoir des largeurs inégales. Dans ce cas, les sous-bandes d'extrémité 88 et 92 pourront aussi présenter des largeurs inégales.

Par ailleurs, les nombres de terminaux des premier et second groupes pourront être variables et ces nombres peuvent être égaux ou différents.

On va maintenant décrire en relation avec les figures 7 à 11 diverses caractéristiques du procédé concrétisé sous forme de programme se trouvant implanté dans l'organe de commande 38 qui permettent de faire appel à des processeurs classiques, disponibles dans le commerce, tout en permettant une allocation ou attribution rapide des ressources à un grand nombre de terminaux.

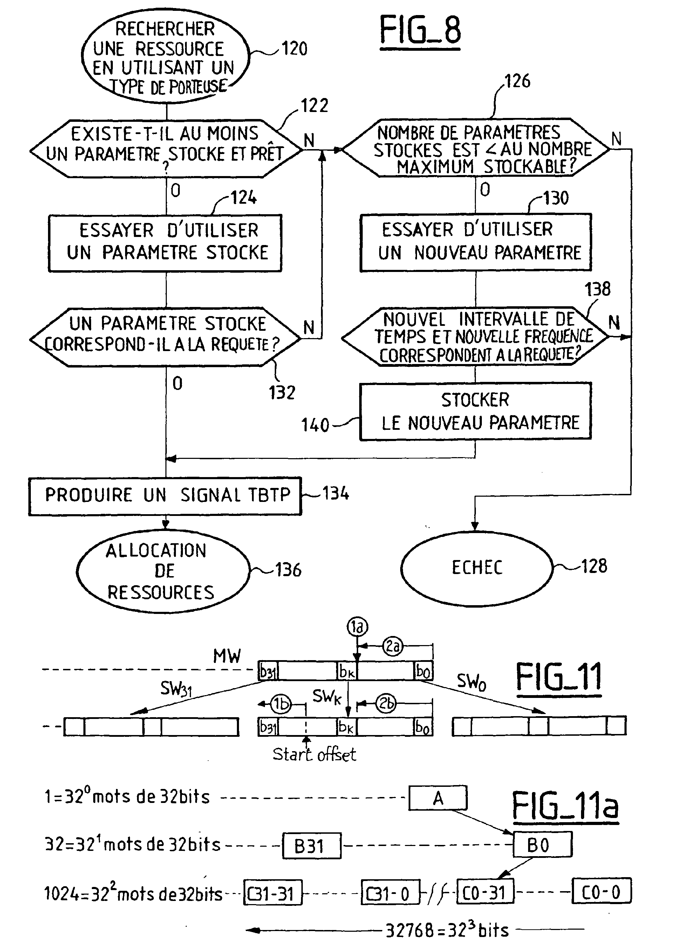

Ces résultats sont obtenus en prévoyant, d'une part, une "cartographie" de données (figure 7) et, d'autre part, des moyens de recherche rapide de données dans ces cartographies (figure 11), cette cartographie étant spécialement adaptée aux moyens de recherche (ou lecture) rapide.

On se réfère donc tout d'abord à la figure 7 qui montre les diverses données qui sont conservées en mémoire du dispositif 38 pour un type de porteuse par trame.

Il s'agit, par exemple, d'une porteuse comprenant 128 intervalles de temps.

On prévoit, pour ce type de porteuse et pour chaque fréquence $f_0$ à $f_N$, une ligne ou vecteur, ou mot, de données $100_0$ ... $100_N$ à 128 bits (autant que d'intervalles de temps) $b_1$ à $b_{128}$, un bit ayant la valeur 1 quand l'intervalle de temps considéré est disponible et ayant la valeur 0 quand cet intervalle de temps est indisponible.

On prévoit également des vecteurs ou mots représentés par des colonnes $102_1$ à $102_{128}$. Chaque colonne correspond à un intervalle de temps et comporte N valeurs, c'est-à-dire autant de valeurs que de fréquences du type déterminé (128 intervalles de temps par trame). Dans chaque colonne $102_i$ pour chaque fréquence de 0 à N, on prévoit un bit de valeur 1 quand la fréquence correspondante est utilisable et de valeur 0 quand cette fréquence est indisponible.

On prévoit aussi un autre vecteur ou mot 104 représenté par une rangée qui indique pour le type donné de porteuse (128 intervalles de temps/trame dans l'exemple) et pour chaque intervalle de temps de ce type de porteuse, s'il existe, dans cet intervalle de temps, au moins une fréquence disponible. Ainsi, la rangée 104 comporte 128 valeurs. Chaque valeur, qui est un bit $b_i$ (0 ou 1), tient compte de la colonne $102_i$ correspondante de la façon suivante : le bit $b_i$ a la valeur 1 s'il existe au moins une fréquence disponible dans cet intervalle de temps, c'est-à-dire si dans la colonne $102_i$, il existe au moins un bit de valeur 1. Autrement dit, un bit de valeur 1 dans cette rangée 104 signifie que, pour cet intervalle de temps, il existe au moins une fréquence disponible.

Les données se trouvant dans les colonnes $102_1$ à $102_{128}$ sont également utilisées dans des compteurs $106_1$ à $106_{128}$ dont chacun contient un nombre qui est le nombre de fréquences utilisables dans l'intervalle de temps i considéré pour un type de porteuse donné, c'est-à-dire le nombre de "1" dans la colonne correspondante. Bien entendu chaque compteur est, d'une part incrémenté, à chaque fois qu'une ressource (une fréquence) est libérée dans la colonne correspondante et, d'autre part, est décrémenté à chaque fois qu'une ressource est attribuée à un terminal pour l'intervalle de temps considéré.

Lorsque le compteur $106_i$ passe à zéro, il n'y a plus de fréquence disponible dans l'intervalle de temps de rang i. Dans ces conditions le bit bi de la rangée 104 est forcé à zéro.

On prévoit également un mot 108 sous forme de rangée analogue à la rangée 104, c'est-à-dire comportant autant de valeurs (bits) que d'intervalles de temps. Un bit à 1 pour un intervalle de temps indique la disponibilité, pour le terminal considéré, de cet intervalle de temps en émission, tant du type étoile que du type maillé.

Pour chaque terminal, il y a autant de mots 108 que de types de porteuses considérés.

Un autre mot 110 sous forme de rangée analogue à la rangée 108 contient une suite de 128 bits (autant que d'intervalles de temps) représentant la disponibilité (quand le bit a la valeur 1) de l'intervalle de temps pour une réception de type maillé. Bien entendu, les données de cette rangée 110 sont telles que si un intervalle de temps est prévu, pour le terminal considéré, pour une réception provenant d'un autre terminal (liaison maillée) il ne peut être prévu en même temps pour la réception provenant d'encore un autre terminal. Pour chaque terminal, il y a autant de mots 110 que de types de porteuses considérés.

Enfin, l'organe 38 tient compte du jeu 112 de paramètres attribué à chaque terminal. On rappelle que ces paramètres sont, d'une part, le type de porteuse (le nombre total d'intervalles de temps au cours d'une trame) et la porteuse, c'est-à-dire la fréquence.

Pour faciliter les calculs il est préférable d'utiliser au maximum les paramètres déjà attribués avant de changer de paramètre ou d'attribuer un paramètre supplémentaire.

Le mécanisme d'attribution d'une ressource à un terminal va maintenant être décrit en relation avec la figure 8.

On notera tout d'abord que la donnée d'entrée est seulement le type de porteuse, c'est-à-dire le nombre d'intervalles de temps par trame. C'est, en effet, la seule donnée qui intervienne pour assurer la qualité de la liaison qui convient au terminal, un intervalle de temps court pouvant être attribué quand le bilan de liaison est bon et un intervalle de temps long devant être utilisé par des bilans de liaison médiocres. À partir de cette donnée d'entrée l'organe de commande 38 choisit une fréquence et un intervalle de temps ou indique qu'il n'a pas réussi à attribuer une ressource. Dans ce cas, l'organe 38 essaiera d'attribuer des ressources sur un autre type de porteuse.

Ainsi le premier bloc 120 de l'organigramme de la figure 8 est : rechercher une ressource en utilisant un type de porteuse.

La seconde étape 122 consiste à déterminer s'il existe au moins un paramètre stocké et prêt (bloc 112, figure 7). En cas de réponse positive à cette question l'organe 38 essaie d'utiliser un paramètre stocké (étape 124). À cet effet il est recherché un paramètre correspondant au type de porteuse requis (étape 120) et il est également recherché un intervalle de temps disponible à une fréquence correspondante pour lequel le terminal source et le terminal destination n'ont pas de contrainte temporelle (pas d'incompatibilité).

En cas de réponse négative à la question correspondant à l'étape 122 (au moins un paramètre prêt et stocké ?) on détermine (étape 126) si le nombre de paramètres stockés est inférieur ou non au nombre maximum de paramètres stockables. Si le nombre maximum est atteint alors l'échec (étape 128) est constaté.

Si le nombre de paramètres stockés n'atteint pas le maximum autorisé on essaie de faire appel à un nouveau paramètre (étape 130). Cet essai consiste à rechercher une nouvelle fréquence ou porteuse correspondant au type considéré et pour laquelle un intervalle de temps est disponible et le terminal source et le terminal destination n'ont pas de contrainte de temps interdisant cet intervalle.

À l'issue de l'étape 124 on détermine si un paramètre stocké correspond à la requête (étape 132). Dans ce cas, un signal d'allocation de ressource "TBTP" est produit (étape 134) et est envoyé au terminal, ce qui aboutit donc au succès d'une allocation de ressource (étape 136).

Si la vérification de l'étape 132 fournit une réponse négative alors on procède à la vérification de l'étape 126.

À l'issue de l'étape 130 on vérifie (étape 138) si le nouvel intervalle de temps et la nouvelle fréquence porteuse correspondent à la requête. En cas de réponse positive on stocke le nouveau paramètre, c'est-à-dire la fréquence et le type de porteuse (étape 140) puis on forme le signal d'allocation de ressource (étape 134).

En cas de réponse négative à la détermination de l'étape 138 on constate l'échec (étape 128).

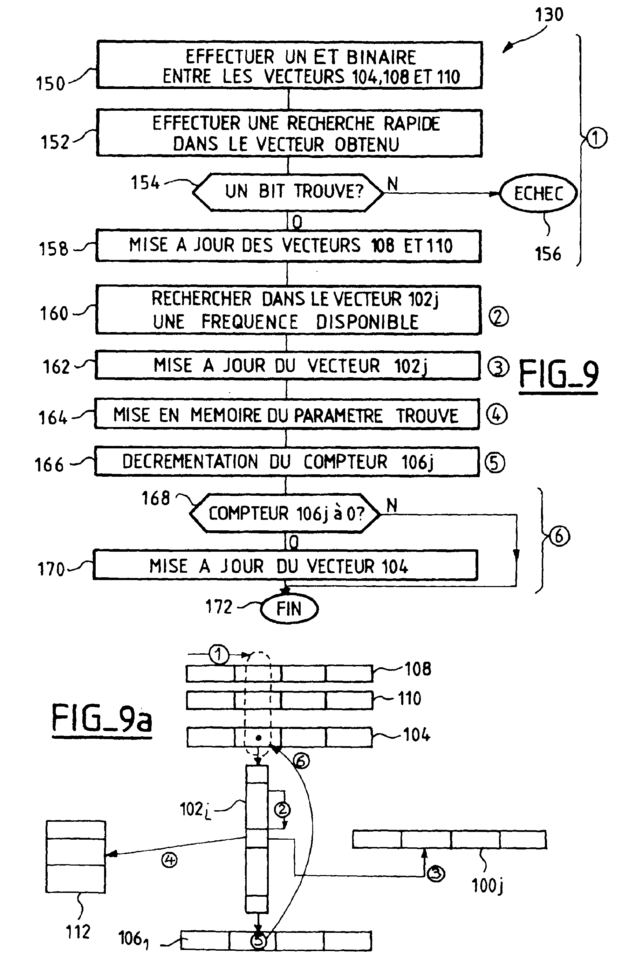

La figure 9 est un organigramme détaillé correspondant à l'étape 130 de la figure 8, c'est-à-dire l'essai de détermination d'un nouveau paramètre.

Pour obtenir un nouveau paramètre on effectue un ET binaire (étape 150) entre les rangées ou vecteurs 104, 108 et 110 de la figure 7. On rappelle ici que chaque vecteur comprend un nombre de valeurs égal au nombre d'intervalles de temps du type de porteuse considéré et qu'un bit à 1 dans le vecteur 104 signifie que pour l'intervalle de temps considéré il existe au moins une fréquence disponible. On rappelle aussi qu'un 1 dans le vecteur 108 signifie que pour l'intervalle de temps considéré et pour le terminal concerné une fréquence est disponible pour une émission. Une valeur à 1 du vecteur 110 signifie que, pour l'intervalle de temps considéré, une fréquence est disponible pour la réception dans cet intervalle de temps.

Si le vecteur résultant de l'opération 150 comporte un 1, ceci signifie qu'un intervalle de temps et une fréquence sont disponibles. Cette détermination est effectuée aux étapes ultérieures 152, 154.

Pour déterminer si le vecteur résultant de l'étape 150 présente une valeur à 1, à l'étape 152 on effectue une recherche rapide - dont le détail sera décrit ultérieurement - à partir d'une position aléatoire dans le vecteur ou mot résultant de l' étape 150. Il est à noter que le démarrage de la recherche à partir d'une position aléatoire présente l'avantage de ne pas privilégier une position déterminée du vecteur obtenu et donc, statistiquement, de permettre l'utilisation de toutes les ressources qui peuvent être disponibles dans les vecteurs obtenus. Dans ces conditions le canal par lequel les ressources sont transmises transmet une distribution relativement uniforme de ressources dans le temps. Il en est ainsi, en particulier, pour le transpondeur à bord du satellite.

L'étape 152 fournit un résultat (154) : un bit a été trouvé ou n'a pas été trouvé. Dans ce dernier cas, on constate l'échec (étape 156).

Si un bit a été trouvé, cela signifie que la ressource trouvée est utilisée et on met donc à jour les vecteurs 108 et 110 (étape 158). Cette mise à jour est effectuée pour tous les types de porteuses utilisées par le terminal considéré afin de permettre la gestion des incompatibilités entre l'utilisation simultanée d'intervalles de temps comme décrit en relation avec la figure 2. Cette figure montre en effet que pour l'intervalle de temps 13 attribué, les intervalles de temps 5 et 1 sont inutilisables. De même pour l'intervalle de temps 6 attribué, les intervalles 1, 14, 15 sont inutilisables ; pour l'intervalle de temps 2 attribué, les intervalles 7, 8, 17, 18, 19, 20 sont inutilisables, etc.

Un bit à 1 ayant été trouvé en position j dans le vecteur résultant des vecteurs 104, 108 et 110, cela signifie que dans la colonne 102j correspondante (figure 7) il existe une valeur à 1 correspondant à une fréquence disponible. On effectue donc (étape 160) une recherche dans ce vecteur $102_j$ pour déterminer une fréquence disponible. Cette recherche part de la dernière fréquence trouvée précédemment ; toutefois on n'utilise pas cette fréquence mais celle qui est disponible immédiatement après. En effet, si on utilisait la fréquence précédemment trouvée (et donc utilisée), on diminuerait encore le nombre d'intervalles de temps disponibles pour cette fréquence, ce qui risquerait de rendre cette fréquence complètement indisponible alors qu'il est préférable d'utiliser au maximum les paramètres assignés, déjà stockés, à un terminal donné.

L'utilisation, résultant de l'étape 160, d'une fréquence oblige à mettre à jour (étape 162) le vecteur $102_j$ : à la fréquence trouvée pour cet intervalle de temps j, le bit est mis à 0.

Ensuite (étape 164), le paramètre trouvé est mis en mémoire.

A la suite de cette étape 164, le compteur $106_j$ (figure 7) est décrémenté (étape 166).

Si le compteur $106_j$ passe à 0 (étape 168), on met à jour le vecteur 104 à la position j (étape 170) et, que l'on passe ou non par cette étape 170 (c'est-à-dire que le compteur 106j soit à 0 ou non), l'opération se termine (étape 172).

Le schéma de la figure 9a illustre, à l'aide des vecteurs 104, 108, 110, $102_j$ et $100_i$ ainsi qu'à l'aide des compteurs $106_1$ ... et des paramètres 112 (comme décrit en relation avec la figure 7) les diverses étapes du procédé qu'on vient de décrire avec la figure 9. Ainsi l'étape ① sur la figure 9a correspond aux étapes 150, 152, 154 et 158 de la figure 9, l'étape ② correspond à l'étape 160 ; l'étape ③ correspond à l'étape 162 ; l'étape ④ correspond à l'étape 164 ; l'étape ⑤ correspond à l'étape 166, et l'étape ⑥ correspond aux étapes 168 et 170.

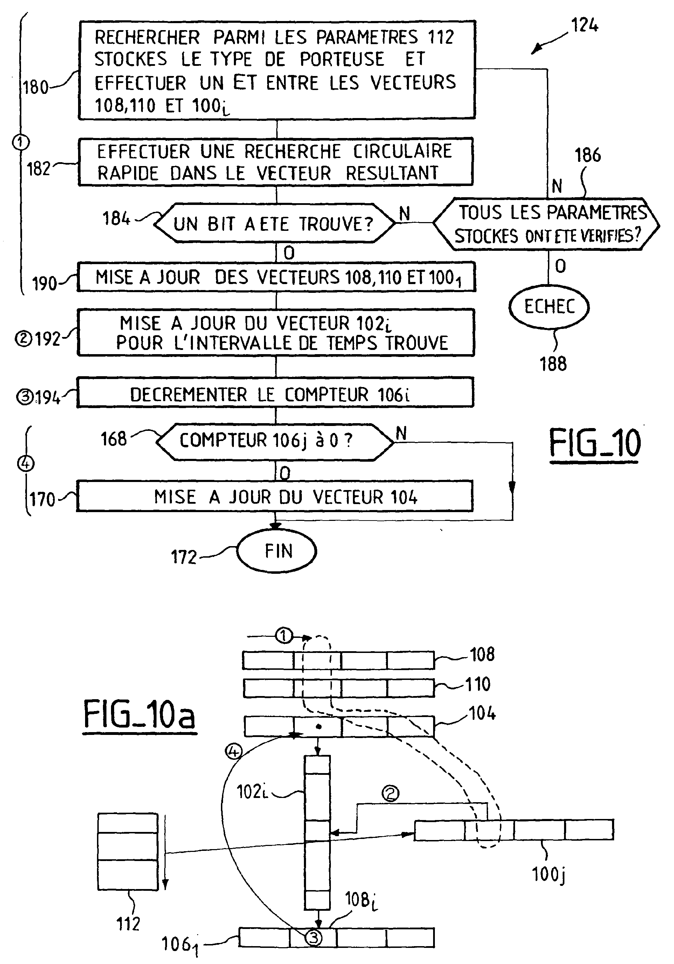

On se réfère maintenant à la figure 10 qui correspond à l'étape 124 de la figure 8 : Essai d'utilisation d'un paramètre stocké.

Au cours de la première étape 180, on recherche parmi les paramètres 112 (figure 7) stockés le type de porteuse déjà stocké et on effectue un ET binaire entre les vecteurs 108, 110 et $100_i$ (fréquence i). Le paramètre (fréquence i) correspond à un des paramètres stockés 112.

Le résultat de l'étape 180 est un nouveau vecteur dans lequel on effectue une recherche d'un intervalle de temps disponible. A cet effet (étape 182), on effectue une recherche de type circulaire en partant du dernier intervalle de temps qui avait été trouvé précédemment, c'est-à-dire qu'on parcourt le vecteur $100_i$ correspondant de la gauche vers la droite et si on n'a pas trouvé de valeur disponible, on revient au début du vecteur. Ainsi, on peut lisser l'attribution des ressources dans le temps, ce qui permet, comme déjà expliqué précédemment, de répartir le débit dans le transpondeur du satellite de télécommunication, le dernier intervalle de temps trouvé ayant une position statistiquement aléatoire.

On vérifie ensuite (étape 184) qu'un bit à 1 a été trouvé dans le vecteur correspondant. S'il n'en est pas ainsi (étape 186), on vérifie que tous les paramètres stockés ont été vérifiés. Dans ce dernier cas, la recherche aboutit à un échec (étape 188). Si tous les paramètres n'ont pas été vérifiés, on revient alors à l'étape 180.

Si le résultat de la vérification de l'étape 184 est qu'on a trouvé un bit à 1 dans le vecteur résultant de l'étape 180 alors on effectue l'étape 190 qui consiste à mettre à jour les vecteurs 108, 110 et $100_i$. Puis (étape 192), on met à jour le vecteur $102_i$ pour l'intervalle de temps qui a été trouvé. Ensuite (étape 194), on décrémente le compteur $106_i$.

Enfin, les étapes 168, 170 et 172 sont identiques à celles décrites en relation avec la figure 9.

La figure 10a est un schéma analogue à celui de la figure 9a et illustre les diverses étapes du procédé qu'on vient de décrire en relation avec la figure 10. Ainsi l'étape ① représentée par des traits interrompus correspond aux étapes 180 à 190 ; l'étape ② correspond à l'étape 192 ; l'étape ③ correspond à l'étape 194, et l'étape ④ correspond aux étapes 168 et 170.

On va maintenant décrire en relation avec la figure 11 un procédé de recherche rapide dans les vecteurs qui est utilisé notamment aux premières étapes des procédés décrits en relation avec les figures 9 et 10.

On considère, dans un exemple, qu'un mot ou vecteur comporte 1 024 bits = $2^{10}$ bits et on cherche à déterminer ceux des bits qui ont la valeur 1.

A cet effet, on partitionne l'ensemble des 1 024 bits en 32 mots de 32 bits chacun et à chaque mot de 32 bits, noté $SW_i$ (mot secondaire) indexé de 0 à 31, on attribue un bit à 1 si au moins un bit a la valeur 1 dans ce mot. L'ensemble des 32 bits ainsi obtenus constitue un mot maître MW. Ainsi, si le bit de rang k est positionné dans le mot maître MW, cela signifie alors nécessairement qu'il y a au moins un bit positionné à 1 dans le mot SW de rang k. Si tous les bits du mot SW de rang k sont à 0, alors nécessairement le bit de rang k du mot MW a la valeur 0.

Ainsi, pour rechercher les bits 1 dans l'ensemble des 1 024 bits, on effectue tout d'abord une recherche dans le mot maître MW. Pour le premier bit à 1 de rang k trouvé dans le mot MW, on recherche alors dans le mot secondaire $SW_k$ le premier bit d'indice i qui est positionné à 1. Le premier bit positionné à 1 dans la suite des 1 024 bits aura donc pour indice $S_{32k+i}$.

Ce type de recherche peut être effectué de façon très rapide si le processeur dispose d'un bus d'au moins 32 bits et s'il dispose d'une instruction machine permettant de trouver en un cycle processeur le premier bit positionné dans un mot de 32 bits. Si le processeur ne dispose pas de cette instruction, les performances seront légèrement inférieures : la boucle de recherche s'effectuera dans le cache de niveau 1 du processeur. Globalement, il suffira donc de deux cycles de processeur et deux accès de mémoire pour trouver un bit à 1 dans une suite de 1 024 bits: un cycle pour la lecture du mot MW et un autre cycle pour la lecture du mot $SW_k$

Pour l'écriture de données dans le vecteur à 1 024 bits, il suffit de deux accès de mémoire, avec un cycle d'écriture dans le mot maître MW et un cycle d'écriture dans le mot secondaire SW.

Pour l'effacement de données dans un tel vecteur ou mot à 1 024 bits, il suffit de mettre à 0 un bit du mot maître MW quand l'ensemble des bits du mot secondaire correspondant présente tous ses bits à 0.

Ainsi, quelle que soit l'opération, la lecture, l'écriture ou l'effacement, il suffira d'au maximum deux accès mémoire.

Pour les recherches circulaires du type de celles décrites plus haut en relation avec la figure 10 on procède de la façon suivante :

On part d'une position initiale « start_offset » comprise entre 0 et 1 023. Cette recherche consiste à partir d'un 1 initialement trouvé dans le mot d'ensemble à 1 024 bits et à essayer de rechercher un bit différent de celui précédemment trouvé de façon circulaire en partant de la position « start_offset » jusqu'à la position 1023. Si on ne trouve pas de bit à 1, on repart alors de 0 jusqu'à la position start_offset.

Ainsi, dans le mot maître MW, on part du bit bk (recherche notée ⓛa sur la figure 11) précédemment trouvé. Dans l'exemple ce bit $b_k$ est à 1. Dans ce cas, on poursuit la recherche dans le mot secondaire $SW_k$ dans lequel le bit précédemment trouvé était le bit $b_i$. La recherche dans le mot MW commencera à partir du bit de rang start_offset / 32 dont les bits de rang inférieur seront masqués et dans le mot secondaire SW à partir du bit de rang start_offset modulo 32 dont les bits de rang inférieur seront masqués. Ainsi, la recherche dans le mot secondaire $SW_k$ part de cette position start_offset modulo 32 pour aller vers les valeurs croissantes, c'est-à-dire vers $b_{31}$. Cette recherche est représentée

par la flèche ⓛb . Si au cours de cette recherche on trouve un bit à 1, celui-ci sera sélectionné. Par contre, si on ne trouve pas de bit à 1 au cours de cette recherche ⓛb alors on revient au mot primaire MW et, partant de 0, on effectue

une recherche ②a . Si entre $b_0$ et $b_k$ dans le mot MW, aucun bit n'a la valeur 1, alors la recherche aboutit de nouveau

au mot secondaire $SW_k$. Dans ce cas, la recherche repartira de $b_0$ (flèche ②b) et dans le pire des cas retombera sur le bit $b_i$ précédemment trouvé.

Ainsi, on voit que dans l'hypothèse la plus défavorable envisagée ici, il faudra effectuer quatre recherches ①a, ①b, ②a et ②b, et donc quatre accès mémoire.

L'invention n'est bien entendu pas limitée à une recherche rapide dans des mots de 1 024 bits séparés en 32 mots secondaires :

Dans le cas d'un mot à $32^N$ positions, N accès mémoire sont nécessaires pour trouver un bit positionné et il faut alors 2N accès mémoire pour trouver un bit positionné de façon circulaire parmi les $32^N$ positions par mise en cascade de mots SW comme illustré en figure 11a qui montre un mot de $32^3$ bits.

Sur cette figure, les 32 mots C0-0 jusqu'à C0-31 correspondent au mot B0 ; de même, les 32 mots C31-0 jusqu'à C31-31 correspondent au mot B31. Les 32 mots B0 jusqu'à B31 correspondent au mot principal A de 32 bits.

Si le bit de rang i est positionné dans le mot A, alors il y a au moins un bit de rang j positionné dans le mot B(i) et il y a au moins un bit positionné dans le mot C(32*ij).

Ces diverses dispositions sont évidemment favorables à une recherche très rapide, ce qui est le but recherché pour l'attribution des ressources.

Dans ce qui précède, on a considéré le cas le plus défavorable pour une recherche circulaire afin de déterminer si l'algorithme d'attribution des ressources est suffisamment rapide. Mais les recherches circulaires ne sont pas les seules consommatrices de temps. De façon générale la situation la plus défavorable est celle pour laquelle il ne reste qu'un seul paramètre disponible, les autres paramètres étant déjà utilisés ou non utilisables. Cette situation correspond à la figure 8 dans laquelle on effectue n-1 (n étant le nombre de paramètres) étapes 124 d'essais d'utilisation d'un paramètre stocké et on effectue une fois la branche 130 (essai d'obtention d'un nouveau paramètre). Le temps maximum d'exécution de la recherche correspond au nombre maximum d'accès mémoire à effectuer.

Dans le pire des cas, le nombre maximum d'accès mémoire (Max access) est de :

```
Max access=(MAX_PARAM-1)*Fast-Search+2*Fast-Search+(2*MAX_TRC_TYPE+3)*Write-BMP+1
```

L'élément MAX_TRC_TYPE signifie le nombre maximum de type de porteuses. "Fast-search" signifie recherche rapide ; "MAX_PARAM" signifie le nombre maximum de paramètres et "Write-BMP" signifie écriture dans un vecteur de bit.

Dans cette formule, le premier terme après le signe d'égalité correspond à l'étape 124 de la figure 8, pour laquelle MAX_PARAM - 1 paramètres sont stockés, mais le ET binaire effectué est nul.

Les autres termes correspondent à l'étape 130 de cette figure 8 dans laquelle on cherche à attribuer un nouveau paramètre. De façon plus précise, le second terme correspond aux étapes 152 et 160 de la figure 9, le troisième terme correspond à l'écriture des vecteurs 104, 100 et 102 (3 écritures) ainsi qu'aux vecteurs 108 et 110 pour tous les types de porteuse considérés (ici MAX_TRC_TYPE), le facteur 2 tenant compte du terminal source et du terminal destination dans le cas d'une allocation maillée.

Ainsi, la mise à jour doit s'effectuer sur toutes les porteuses ou tous les types de porteuses pour tenir compte des interdictions d'utilisation de deux intervalles de temps simultanés en émission ou en réception. Enfin, le dernier terme (nombre 1) correspond à la mise à jour d'un compteur $106_i$ (figure 7).

On obtient ainsi la formule suivante :

$$2N(P-1)+4N+[(2T+3)N]+1=2NP-2N+4N+2NT+3N+1 \qquad (F)$$

Dans cette formule, N correspond au fait qu'on utilise des vecteurs de longueur $32^N$, P est le nombre maximum de paramètres et T est le nombre maximum de types de porteuses.

Si on suppose maintenant que P = 4, T = 6 et N = 2 soit $32^2$ = 1 024, l'application de la formule (F) ci-dessus fournit 51 accès mémoire.

Si on suppose encore que la capacité totale du système MF-TDMA est de 90 Mbits par seconde et que le débit d'un intervalle de temps est de 16 000 bits par seconde, on dispose de 5 625 ressources. Une autre hypothèse encore est que le nombre de terminaux est de 100 000.

Avec un accès mémoire à 100 MHz, le temps d'accès mémoire est de 10 ns, soit pour 51 accès mémoire environ 0,5 μs. Cependant, ce temps de 0,5 μs doit être majoré car il faut tenir compte, dans une moindre mesure, du calcul du ET binaire effectué dans le pire cas entre 3 vecteurs d'intervalles de temps pour une allocation en «maillé» et, dans une plus grande mesure, du fait qu'à chaque supertrame il est nécessaire de dupliquer les ressources figées pour la transmission en temps réel vu la taille des données à dupliquer et qu'en fait, pour chaque ressource, il faut 2 μs au maximum. Ainsi, avec 5 625 ressources de 2 μs chacune, il faut 12 ms au maximum. Autrement dit, sur un budget total de 100 ms pour une supertrame, l'algorithme d'attribution des ressources nécessite un budget de 12 ms. On remarque aussi que le budget en temps dépend linéairement du nombre de ressources. Par ailleurs, le temps de traitement dépend seulement dans une faible mesure du nombre de terminaux. Ce nombre intervient seulement quand il faut dupliquer tous les vecteurs comme indiqué dans l'organigramme de la figure 5, étapes 64 à 68.

Les procédés que l'on a décrit ci-dessus, sont particulièrement adaptés à la norme DVB-RCS qui permet de transmettre des données multimedia numériques par satellite.

**Revendications**

1. Procédé d'attribution des resources en communications à des terminaux dans un système de télécommunication du type MF TDMA dans lequel des données numériques sont transmisses sur une pluralité de porteuses et sur des intervalles de temps sélectionnés pour chaque porteuse, les ressources étant attribuées pour chaque terminal par trames, groupées en supertrames, **caractérisé en ce que**, pour la transmission, pour un terminal, de données en temps réel, dans chaque trame d'un rang donné d'une supertrame (50), le motif (13, 6, 2, 22, 11), constitué d'intervalles de temps et de porteuses, de ressources attribuées au terminal reste le même au cours des diverses supertrames de la communication concernée par les donnés en temps réel, et **en ce que** le motif de ressources attribuées à la communication de données en temps réel est le même pour toutes les trames de chaque superstrame.

2. Procédé selon la revendication 1, **caractérisé en ce qu'**on attribue aux communications de données autres qu'en temps réel des ressources disponibles variables d'une supertrame à une autre supertrame.

3. Procédé selon la revendication 1 ou 2, **caractérisé en ce que** lorsqu'un intervalle de temps (6) est attribué à un terminal pour un type émission ou réception - de transmission, les intervalle de temps simultanés des autres porteuses qui sont égaux à, qui chevauchent (1), ou sont compris (15, 16) dans, l'intervalle de temps attribue sont rendus indisponibles pour ce terminal et pour le même type de transmission, de façon qu'un terminal ne puisse émettre ou recevoir simultanément dans le même intervalle de temps sur deux porteuses différenties.

4. Procédé selon l'une quelconque des revendications précédentes pour l'attribution des ressources en communications à des terminaux dans un système de télécommunication du type MF-TDMA par satellite transparent, **caractérisé en ce que**, pour répartir de façon, uniforme les ressources en intervalles de temps, dans chaque trame, l'attribution de ces ressources en intervalles de temps, s'effectue a chaque nouvelle superframe en partant du dernier intervalle de temps qui avait été positionné au cours de la supertrame précédente.

5. Procèdé selon l'une quelconque des revendications précédentes, **caractérisé en ce que**, pour faciliter la recherche de ressources disponibles a attribuer, pour chaque type de porteuse, c'est-à-dire pour les porteuses ayant une même durée d'intervalle de temps, on prévoit un ensemble de vecteurs ($100_i$ , $102_i$, 104, 108, 110), ou mots, constitués chacun d'une suite de chiffres binaires dont une valeur représente une ressource disponible et l'autre valeur une indisponibilité de ressources, ces vecteurs comprenant :

   - un premier vecteur (104) comportant un nombre de composantes égal au nombre d'interwalles de temps de la trame et dont la valeur de chaque composante ($b_i$) représente la disponibilité d'une fréquence pour l'intervalle de temps considéré,
   - pour chaque intervalle de temps un vecteur de fréquences ($102_i$) comprenant un nombre de composantes égal au nombre de fréquences, la valeur de chaque composante représentant la disponibilité de cette fréquence, et
   - pour chaque fréquence un vecteur d'intervalles ($100_j$) de temps ayant un nombre de composantes égal au nombre d'intervalles de temps, la valeur de chaque composante représentant la disponibilité de cet intervalle de temps à cette fréquence.

6. Procédé selon la revendication 5, **caractérisé en ce que**, pour l'attribution d'une ressource, on recherche d'abord dans le premier vecteur puis, si au moins une composante indique la disponibilité d'une fréquente, pour l'intervalle de temps correspondant on recherche la fréquente disponible dans le secteur de fréquences.

7.  Procédé selon la revendication 5, **caractérisé en ce que**, pour l'attribution d'une ressource à un terminal pour lequel une fréquente porteuse, du type considéré, est disponible, on effectue une recherche dans le vecteur d'intervalles de temps qui correspond à cette fréquence disponible afin de déterminer un intervalle de temps disponible.

8.  Procédé selon l'une quelconque des revendications 5 à 7, **caractérise en ce qu'**on prévoit, pour chaque type de porteuse, un vecteur (108) comprenant autant de composantes que d'intervalles de temps, chaque composante représentant la disponibilité en émission de cet intervalle de temps, et un vecteur (110) comprenant également un nombre de composantes égal au nombre d'intervalles de temps et dont la valeur de chaque composante représente la disponibilité en réception de cet intervalle de temps.

9.  Procédé selon l'une des revendications 5 à 8, **caractérisé en ce que**, pour permettre une recherche rapide, on divise chaque vecteur ou mot en un ensemble de mots secondaires ($SW_i$) et **en ce qu'**on forme un mot primaire (MW) ayant un nombre de chiffres binaires égal au nombre des mots secondaires, la valeur de chaque chiffre binaire du mot primaire représentant la présence, dans le mot secondaire correspondant, d'au moins un chiffre représentatif d'une disponibilité de ressource, la recherche s'effectuant d'abord dans le mot primaire puis dans un mont secondaire correspondant à une ressource disponible.

10. Procédé selon la revendication 9, **caractérisé en ce que** tous les mots secondaires comportent le même nombre de chiffres binaires et **en ce que** le mot primaire comporte un nombre de chiffres binaires égal au nombre de chiffres binaires de chaque mont secondaire.

## Claims

1.  A method for assigning communications resources to terminals in a telecommunication system of the MF-TDMA type wherein digital data are transmitted over a plurality of carriers and at time intervals selected for each carrier, the resources being assigned for each terminal by frames, grouped into superframes, **characterized in that** for the transmission of real-time data for a terminal, in each frame of a given rank of a superframe (50), the pattern (13, 6, 2, 22, 11) of resources assigned to the terminal, made up of time intervals and carriers, remains the same over the course of the various superframes of the communication concerned by the real-time data, and **in that** the pattern of resources assigned to the communication of real-time data is the same for all the frames of each superframe.

2.  A method according to claim 1, **characterized in that** communications of data that is not real-time are assigned available resources that vary from one superframe to another superframe.

3.  A method according to claim 1 or 2, **characterized in that** whenever a time interval (6) is assigned to a terminal for a transmission type (emission or reception), the simultaneous time intervals of the other carriers which are equal to, overlap (1), or are contained within (15, 16) the assigned time interval are made unavailable for that terminal and for that same transmission type, such that a terminal can not emit or receive simultaneously within the same time interval over two different carriers.

4.  A method according to any one of the preceding claims for assigning communications resources to terminals in transparent-satellite telecommunication system of the MF-TDMA type, **characterized in that**, in order to uniformly distribute the time interval resources within each frame, the assignment of these time interval resources is carried out at each new superframe beginning from the last time interval that had been placed during the course of the previous superframe.

5.  A method according to any one of the preceding claims, **characterized in that**, in order to facilitate the search for available resources to assign, for each type of carrier, meaning for the carriers that have time intervals of the same duration, a set of vectors ($100_i$, $102_i$, 104, 108, 110), or words, are created, each made up of a series of binary digits in which one value represents an available resource and the other value a resource unavailability, these vectors comprising:

    - a first vector (104) comprising a number of components equal to the number of time intervals of the frame, and in which the value of each component ($b_i$) represents the availability of a frequency for the time interval in question,

- for each time interval, a frequency vector ($102_i$) comprising a number of components equal to the number of frequencies, the value of each component representing the availability of that frequency, and

- for each frequency, a time interval vector ($100_j$) having a number of components equal to the number of time intervals; the value of each component representing the availability of that time interval at that frequency.

6. A method according to claim 5, **characterized in that**, for assigning a resource, one first searches within the first vector, and then, if at least one component indicates the availability of a frequency, for the corresponding time interval one searches for the available frequency within the frequency vector.

7. A method according to claim 5, **characterized in that**, for assigning a resource to a terminal for which a carrier frequency of the type in question is available, one searches within the time interval vector that corresponds to that available frequency in order to determine an available time interval.

8. A method according to any one of the claims 5 to 7, **characterized in that**, for each type of carrier, a vector (108) is provided comprising as many components as time intervals, each component representing the availability of that time interval for emission, and a vector (110) also comprising a number of components equal to the number of time intervals and in which the value of each component represents the availability of that time interval for reception.

9. A method according to any one of the claims 5 to 8, **characterized in that**, in order to enable a fast search, each vector or word is divided into a series of secondary words ($SW_i$) and **in that** a main word (MW) is formed having a number of binary digits equal to the number of secondary words, the value of each binary digit of the main word representing the presence, within the corresponding secondary word, of at least one digit representative of a resource availability, with the search first being carried out within the main word and then within a secondary word corresponding to an available resource.

10. A method according to claim 9, **characterized in that** all the secondary words comprise the same number of binary digits, and **in that** the main word comprises a number of binary digits equal to the number of binary digits of each secondary word.


**Patentansprüche**

1. Verfahren zum Zuteilen von Kommunikationsressourcen an Endgeräte in einem Telekommunikationssystem vom Typ MF-TDMA, in welchem digitale Daten auf einer Vielzahl von Trägern und in für einen jeden Träger ausgewählten Zeitintervallen übertragen werden, wobei die Ressourcen für jedes Endgerät in Rahmen, gruppiert in Superrahmen, zugeteilt werden, **dadurch gekennzeichnet, dass** für die Übertragung, für ein Endgerät, von Daten in Echtzeit, in jedem Rahmen eines gegebenen Rangs eines Superrahmen (50), das Muster (13, 6, 2, 22, 11), bestehend aus Zeitintervallen und Trägern, von dem Endgerät zugeteilten Ressourcen während der verschiedenen Superrahmen der von den Daten in Echtzeit betroffenen Kommunikation dasselbe bleibt, und dass das Muster von der Kommunikation von Daten in Echtzeit zugeteilten Ressourcen für alle Rahmen eines jeden Superrahmens dasselbe ist.

2. Verfahren nach Anspruch 1, **dadurch gekennzeichnet, dass** man für die Datenkommunikationen, die nicht in Echtzeit erfolgen, verfügbare Ressourcen zuteilt, die von einem Superrahmen zu einem anderen Superrahmen variabel sind.

3. Verfahren nach Anspruch 1 oder 2, **dadurch gekennzeichnet, dass**, wenn ein Zeitintervall (6) für einen Übertragungstyp - Senden oder Empfang - an ein Endgerät zugeteilt wird, die zeitgleichen Zeitintervalle der anderen Träger, welche dem zugeteilten Zeitintervall entsprechen, dieses überlappen (1) oder darin begriffen (15, 16) sind, für dieses Endgerät und für denselben Übertragungstyp verfügbar gemacht werden, so dass ein Endgerät nicht gleichzeitig in einem selben Zeitintervall auf zwei verschiedenen Trägern senden oder empfangen kann.

4. Verfahren nach einem beliebigen der vorstehenden Ansprüche für die Zuteilung von Kommunikationsressourcen an Endgeräte in einem Telekommunikationssystem vom Typ MF-TDMA über einen transparenten Satelliten, **dadurch gekennzeichnet, dass**, um die Ressourcen in jedem Rahmen gleichmäßig in Zeitintervalle zu verteilen, die Zuteilung dieser Ressourcen in Zeitintervallen für jeden neuen Superrahmen, ausgehend von dem letzten Zeitintervall, welches während des vorangehenden Superrahmens positioniert wurde, erfolgt.

5. Verfahren nach einem beliebigen der vorstehenden Ansprüche, **dadurch gekennzeichnet, dass** man, um die Suche nach verfügbaren zuzuteilenden Ressourcen für jeden Trägertyp, das heißt für die Rahmen mit einer selben Zeitintervalldauer, zu erleichtern, einen Satz von Vektoren ($100_i$, $102_i$, 104, 108, 110), oder Wörtern, bestehend aus einer Folge von Binärzeichen, von denen ein Wert eine verfügbare Ressource und der andere Wert eine Nichtverfügbarkeit von Ressourcen darstellt, vorsieht, wobei diese Vektoren umfassen:

- Einen ersten Vektor (104) mit einer Anzahl von Komponenten, welche der Anzahl der Zeitintervalle des Rahmens entspricht, und wobei der Wert einer jeden Komponente ($b_j$) die Verfügbarkeit einer Frequenz für das betroffene Zeitintervall darstellt,
- für jedes Zeitintervall einen Frequenzvektor ($102_i$) mit einer Anzahl von Komponenten, welche der Anzahl von Frequenzen entspricht, wobei der Wert einer jeden Komponente die Verfügbarkeit dieser Frequenz darstellt, und
- für jede Frequenz einen Zeitintervallvektor ($100_j$) mit einer Anzahl von Komponenten, welche der Anzahl der Zeitintervalle entspricht, wobei der Wert einer jeden Komponente die Verfügbarkeit dieses Zeitintervalls bei dieser Frequenz darstellt.

6. Verfahren nach Anspruch 5, **dadurch gekennzeichnet, dass** man, für die Zuteilung einer Ressource, zuerst in dem ersten Vektor sucht und anschließend, wenn mindestens eine Komponente die Verfügbarkeit einer Frequenz für das entsprechende Zeitintervall anzeigt, die in dem Frequenzvektor verfügbare Frequenz sucht.

7. Verfahren nach Anspruch 5, **dadurch gekennzeichnet, dass** man, für die Zuteilung einer Ressource an ein Endgerät, für welches eine Trägerfrequenz des betroffenen Typs verfügbar ist, eine Suche in demjenigen Zeitintervallvektor, welcher dieser verfügbaren Frequenz entspricht, durchführt, um ein verfügbares Zeitintervall zu ermitteln.

8. Verfahren nach einem beliebigen der Ansprüche 5 bis 7, **dadurch gekennzeichnet, dass** man für jeden Trägertyp einen Vektor (108), welcher so viele Komponenten wie Zeitintervalle umfasst, wobei jede Komponente die Verfügbarkeit dieses Zeitintervalls für das Senden darstellt, und einen Vektor (110), dessen Anzahl von Komponenten ebenfalls der Anzahl von Zeitintervallen entspricht, wobei der Wert einer jeden Komponente die Verfügbarkeit dieses Zeitintervalls für den Empfang darstellt, vorsieht.

9. Verfahren nach einem beliebigen der Ansprüche 5 bis 8, **dadurch gekennzeichnet, dass** man, um eine schnelle Suche zu ermöglichen, jeden Vektor oder jedes Wort in einen Satz von sekundären Wörtern ($SW_i$) unterteilt, und dass man ein primäres Wort (MW) bildet, dessen Anzahl von Binärzeichen der Anzahl von sekundären Wörtern entspricht, wobei der Wert eines jeden Binärzeichens des primären Worts das Vorhandensein, in dem entsprechenden sekundären Wort, mindestens eines Zeichens, welches für die Verfügbarkeit einer Ressource repräsentativ ist, darstellt, wobei die Suche zuerst in dem primären Wort und anschließend in einem einer verfügbaren Ressource entsprechenden sekundären Wort erfolgt.

10. Verfahren nach Anspruch 9, **dadurch gekennzeichnet, dass** alle sekundären Wörter dieselbe Anzahl von Binärzeichen enthalten, und dass das primäre Wort eine Anzahl von Binärzeichen enthält, welche der Anzahl der Binärzeichen eines jeden sekundären Worts entspricht.

**FIG_1**

**FIG_2**

**FIG_3**

**FIG_4**

## FIG_5

ATTENDRE DEBUT SUPERTRAME — 60

TRAITEMENT TRAFIC RT — 62

ATTRIBUTION DE RESSOURCES POUR TRAFIC RT — 64

TRAITEMENT TRAFIC nRT — 66

ATTRIBUTION DE RESSOURCES POUR TRAFIC nRT PAR SUPERTRAME — 68

70

## FIG_6

80

82 84

86 90

88 92

94

## FIG_7

108

110

$b_1$ $b_i$ $b_{128}$ 104

$102_i$

$b_1$ $100_0$ $b_{128}$

$102_1$ $102_{128}$ $100_j$

$106_1$ $106_{128}$ $100_N$

112

# FIG_8

RECHERCHER UNE RESSOURCE EN UTILISANT UN TYPE DE PORTEUSE — 120

EXISTE-T-IL AU MOINS UN PARAMETRE STOCKE ET PRÊT ? — 122  N

0

ESSAYER D'UTILISER UN PARAMETRE STOCKE — 124

UN PARAMETRE STOCKE CORRESPOND-IL A LA REQUETE ? — 132  N

0

PRODUIRE UN SIGNAL TBTP — 134

ALLOCATION DE RESSOURCES — 136

NOMBRE DE PARAMETRES STOCKES EST < AU NOMBRE MAXIMUM STOCKABLE ? — 126  N

0

ESSAYER D'UTILISER UN NOUVEAU PARAMETRE — 130

NOUVEL INTERVALLE DE TEMPS ET NOUVELLE FREQUENCE CORRESPONDENT A LA REQUETE ? — 138  N

STOCKER LE NOUVEAU PARAMETRE — 140

ECHEC — 128

## FIG_11

MW

b31   bk   b0

SW31      SWk      SW0

(1a) (2a) (1b) (2b)

b31   bk   b0

Start offset

## FIG_11a

$1 = 32^0$ mots de 32bits ——————————  A

$32 = 32^1$ mots de 32bits ———— B31 ————————— B0

$1024 = 32^2$ mots de 32bits ··· C31-31 ——— C31-0 // C0-31 ———— C0-0

←——————— $32768 = 32^3$ bits ——————

130

150 — EFFECTUER UN ET BINAIRE
ENTRE LES VECTEURS 104,108 ET 110

152 — EFFECTUER UNE RECHERCHE RAPIDE
DANS LE VECTEUR OBTENU

154 — UN BIT TROUVE? — N → ECHEC

156

O

158 — MISE A JOUR DES VECTEURS 108 ET 110

①

160 — RECHERCHER DANS LE VECTEUR 102j
UNE FREQUENCE DISPONIBLE

②

162 — MISE A JOUR DU VECTEUR 102j

③ FIG_9

164 — MISE EN MEMOIRE DU PARAMETRE TROUVE

④

166 — DECREMENTATION DU COMPTEUR 106j

⑤

168 — COMPTEUR 106j à 0? — N

O

170 — MISE A JOUR DU VECTEUR 104

⑥

172 — FIN

FIG_9a

① — 108
— 110
— 104

⑥

102ᵢ — ②

④

③ — 100j

112

106₁

⑤

FIG_10

FIG_10a

**EP 1 261 151 B1**

**RÉFÉRENCES CITÉES DANS LA DESCRIPTION**

**Documents brevets cités dans la description**

*   US 6031827 A